# EUROPEAN PATENT APPLICATION

(11) **EP 4 530 050 A1**
(43) Date of publication of application: **02.04.2025**
(21) Application number: 23199899.8
(22) Date of filing: 26.09.2023
(51) Int. Cl.: B29C 70/46, B65D 65/46, B65D 85/804

(54) **FIBER-REINFORCED COMPOSITE MATERIAL AND PORTION PACKAGES AND PORTION PACKAGINGS MANUFACTURED USING THE SAME**

(71) Applicant: Tchibo GmbH, 22297 Hamburg (DE)
(72) Inventor: DÖHMEN, Ben, 20144 Hamburg (DE); MAYR, Viktoria, 22926 Ahrensburg (DE); WICHE, Marius-Konstantin, 22763 Hamburg (DE)
(74) Representative: Frei Patent Attorneys

(57) **Abstract**

The **fiber-reinforced composite material** (5) comprises a **polymer matrix** and **fibers** embedded in the polymer matrix, wherein, to at least 80% by weight, the polymer matrix is **biodegradable**, and at least 80% by weight of the fibers are **biodegradable.**

The fiber-reinforced composite material (5) can be used as a material forming a portion of a **wall** of a part (1a) of a **portion packaging** for packaging an extraction material for preparation of a beverage from the extraction material and an extraction liquid, such as of a coffee capsule. The portion packaging comprises two or more **wall sections** (1') and a **wall-forming part** (2) comprising two or more **sheet sections**, wherein each of the wall sections (1') comprise a respective one of the sheet sections. The wall-forming part (2) is made of the fiber-reinforced composite material (5). In an injection molding process, the portion packaging can be provided with a **coating** (7a) and/or with a **filling material** (7b) closing any **gap** between adjoining edges (20a, 20b) of sheet sections of the wall-forming part (2). The portion packaging can be very ecological, in particular home-compostable.

## Description

The invention relates to a fiber-reinforced composite material and to its use as a material for portion packagings, such as for coffee capsules. Thus, the invention also relates to the preparation of beverages or the like from an extraction material, for example ground coffee, contained in a portion packaging (for example a coffee capsule). Corresponding beverage preparation machines for preparing beverages or the like from a portion package with such a portion packaging and with an extraction material (for example coffee, more specifically ground coffee) which is contained in the portion package are known in the art. Furthermore, the invention also relates to ways of manufacturing the fiber-reinforced composite material and to ways of manufacturing the portion packagings and corresponding portion packages. It relates to methods and materials and devices according to the opening clauses of the claims.

Beverage preparation machines for preparing beverages or the like from an extraction material present in a portion packaging are known, including but not limited to, as coffee machines or espresso machines. Due to the extraction process for the preparation of the beverage, they can also be referred to as extraction devices. In many corresponding systems, the portion packages are embodied as capsules (portion capsules), in which the extraction material, e.g., ground coffee, is sealed, e.g., in an airtight manner. For the extraction, the capsule is pierced, for example on two opposite sides. An extraction liquid - usually hot water - is then introduced on the first side (injector side). On the second side (discharge side or extractor side), the extraction product is discharged from the capsule. This is done in a so-called brewing module. Such a module comprises a brewing chamber in which the capsule is accommodated. Depending on the beverage to be prepared and on the system, quite considerable pressure must be present inside the capsule during the brewing process. As an alternative to systems in which the portion capsule is pierced, there are also systems with capsules that are already provided with a perforation which, for example, is covered by a protective film that is removed or dissolved before the brewing process.

Particularly popular are brewing modules in which the capsule is inserted and the brewing chamber is closed, for example, by means of an operating lever or by means of a motor, wherein when the brewing chamber is opened again after the brewing process, the capsule is automatically removed from the brewing chamber and ejected into a capsule container. Such brewing modules with automatic capsule ejection are usually designed as horizontal brewing modules, i.e. the capsule is inserted from above, the brewing chamber is closed by a horizontal relative movement of two brewing module parts (injector and discharge unit), the brewing liquid flows primarily horizontally, and the capsule container is embodied below the brewing chamber.

The invention relates to such portion packagings and portion packages and to their manufacture.

Portion packagings made of various polymers and/or of aluminium are known. And various ways of manufacturing portion packagings are known, too.

In view of environmental and sustainability considerations, it is desirable to use portion packagings which comprise, preferably predominantly, a biodegradable material, e.g., a compostable material. And/or it would be desirable if the portion packagings would comprise, preferably predominantly, recycled materials. And/or it would be desirable if the portion packagings would be recyclable, at least to a large extent.

New materials, however, may also require new manufacturing methods.

The inventors therefore developed a new material, more particularly a sheet material, to be used for the manufacture of such portion packaging, in particular wherein walls of portion packagings are predominantly formed by said new material. Said new material is a fiber-reinforced composite material which, to a large extent, is biodegradable and which furthermore can be made, at least in part, of recycled and/or renewable materials.

Therefore, one object of the invention is to provide a new material, in particular a material which can be used for the manufacture of portion packapings, such as coffee capsules.

Another object of the invention is to provide a new material which is particularly ecological.

Another object of the invention is to provide a method for manufacturing said new material.

Another object of the invention is to provide portion packagings, which are particularly ecological, as well as corresponding portion packages, such as coffee capsules.

Another object of the invention is to provide portion packagings which, at least to a large extent, are biodegradable, in particular compostable, more particularly home compostable.

Another object of the invention is to provide new methods for manufacturing portion packagings and portion packages, such as coffee capsules.

Another object of the invention is to provide portion packagings which, in part, are made of recycled materials, in particular made of wastepaper.

Another object of the invention is to provide portion packagings which, in part, are made of renewable materials, in particular of renewable fibers, such as plant fibers, e.g., fibers from hay, straw, hemp or the like.

Further objects and various advantages emerge from the description and embodiments below.

At least one of these objects can be achieved in some implementations of materials and/or devices and/or methods described in this disclosure.

The inventors sought to find a way to make portion packagings more ecological and have been inspired by fiber-reinforced composite materials where fibers embedded in a polymer matrix contribute to the stability and strength of the material. For most applications, however, fibers like carbon fibers, ceramics fibers or other fibers which are not biodegradable are used as well as polymer matrices which are not biodegradable.

And furthermore, the inventors contemplated a way of enabling the use of a sheet-shaped material for producing a portion packaging therefrom. If one starts with a flat sheet of paper-based material, that sheet needs to be shaped, and, for achieving stability and/or airtightness, different portions or sections of the sheet need to be interconnected, and, depending on the properties of the sheet, more particularly of a surface thereof which is in contact with hot water during a beverage preparation process, a coating may be applied to make the material more suitable for the application.

The inventors contemplated that the interconnections and/or the coating could be accomplished using injection molding, carried out in such a way that the sheet, in a suitably shaped state, is accommodated in the injection molding tool during the injection molding process. This way, the interconnections and/or the coating can be formed by the injection molding material, which, e.g., can fill gaps between sections of the sheet and cover an interior surface of the portion packaging. Stability and/or airtightness and/or water resistance of the portion packaging can be achieved in this way.

The suggested method is, in some way, a bit similar to a process known as "in-mold labelling". In such a process, however, a small label is inserted in the injection molding tool, and the by far largest volume portion of the product is made of the injection molding material - whereas in the herein described manufacturing method, most of the material volume of the portion packaging will usually be taken by the material of the sheet, while only a minor portion of the volume is taken by the injection molding material.

Portion packagings and corresponding portion packages can this way be produced in a particularly ecological way, in particular when specific injection molding materials are used, and when specific materials, namely the herein described fiber-reinforced composite materials are used for the walls of the portion packaging, i.e. for the herein described wall-forming part.

In particular, the **fiber-reinforced composite material** can comprise a **polymer matrix** and **fibers** embedded in the polymer matrix, wherein, more particularly, to at least 80% by weight, in particular to at least 90% by weight, the polymer matrix is **biodegradable,** and wherein, more particularly, at least 80% by weight, in particular at least 90% by weight, of the fibers are **biodegradable.**

This way, the fiber-reinforced composite material can be a particularly environmentally friendly one and, at the same time, can suited for the purpose.

The fibers can mechanically strengthen the composite material; and on the other hand, they contribute to making the material ecological, as the fibers can be recycled fibers and/or renewable fibers.

The fibers reinforce the material and can thus be referred to as reinforcing fibers.

For example, the polymer matrix can be essentially biodegradable, i.e. made of a biodegradable polymer material.

In some embodiments, the polymer matrix is comprised of a **thermoplast** polymer material to at least 80% by volume, more particularly to at least 95% by volume. This can facilitate the envisaged process for manufacturing the fiber-reinforced composite material, as the application of heat can be used for facilitating embedding the fibers in the polymer matrix.

In some embodiments, the polymer matrix comprises a **water-soluble polymer material,** in particular to at least 35% by weight, more particularly to at least 45% by weight, even more particularly to at least 70% by weight.

For example, the polymer matrix can be comprised of a water-soluble polymer material, i.e. can be made of a water-soluble polymer material.

The water-soluble polymer material can provide an **oxygen barrier,** in particular considering the herein described water-soluble polymer materials, more specifically vinyl-alcohol copolymers. For extraction materials such as ground coffee, protection from oxygen is very important in order to ensure quality and for achieving a suitable shelf life.

In some embodiments, the fiber-reinforced composite material has a sheet shape and provides, across the sheet, an **oxygen transmission rate (OTR)**, at 23°C and a relative humidity of 50%, of at most 3 cm³/m² per day, in particular of at most 1 cm³/m² per day, more particularly of at most 0.2 cm³/m² per day. This way, a suitable protection from oxygen can be achievable.

In some embodiments, the **water-soluble polymer material** forms a continuous layer. More particularly, in some embodiments, the fiber-reinforced composite material has a sheet shape, and the water-soluble polymer material forms a continuous layer, in particular essentially parallel to the sheet. This can enhance the oxygen barrier functionality of the water-soluble polymer material.

With reference to the manufacturing method described below, the first sheet and/or the second sheet can be a sheet of a water-soluble polymer material.

In some embodiments, the water-soluble polymer material is a **vinyl-alcohol copolymer.** Such materials are ecologically useful and can provide a suitable oxygen barrier functionality.

In particular, the water-soluble polymer material can be one of
- a poly(vinyl alcohol) copolymer;
- a butenediol-vinylalcohol copolymer;
- an ethylene-vinylalcohol copolymer;
or can be a mixture of two or more of
- a poly(vinyl alcohol) copolymer;
- a butenediol-vinylalcohol copolymer;
- an ethylene-vinylalcohol copolymer.

To these, we herein also refer as **"the herein described water-soluble polymer materials".**

In some embodiments, the water-soluble polymer material comprises a poly(vinyl alcohol) (PVOH), more particularly the water-soluble polymer material is a poly(vinyl alcohol) (PVOH). The poly(vinyl alcohol) can in particular be a vinyl-alcohol copolymer. PVOH exhibits a very good biodegradability.

In some embodiments, the water-soluble polymer material comprises a butenediol-vinylalcohol-copolymer (BVOH), more particularly the water-soluble polymer material is a butenediol-vinylalcohol-copolymer (BVOH). BVOH can have a particularly good solubility in water, especially at high degrees of hydrolysis, such as close to or at 100%.

In some embodiments, the water-soluble polymer material comprises a ethylene-vinylalcohol copolymer (EVOH), more particularly the water-soluble polymer material is an ethylene-vinylalcohol copolymer (EVOH). EVOH can provide, especially at high ethylene contents, a particularly good oxygen barrier function, in particular at high humidities.

In some embodiments, the fibers are, to at least 80% by weight, **cellulose** fibers, e.g., the fibers can essentially be **cellulose** fibers.

The cellulose fibers can be, e.g., recycled fibers (such as wastepaper fibers) and/or renewable fibers (such as plant fibers).

In some embodiments, the fibers are, to at least 60% by weight, in particular to at least 80% by weight, wastepaper fibers.

In some embodiments, the fibers are fibers of a biodegradable polymer, such as fibers of the herein described water-soluble polymer materials and/or of the herein described water-insoluble polymer materials.

In some embodiments, the fiber-reinforced composite material has a sheet shape. Such a material can be particularly suitable for manufacturing a portion packaging, in particular according to the herein described manufacturing method.

More specifically, the fiber-reinforced composite material can have a thickness between of 0.8 mm and 2.5 mm, in particular of between 1 mm and 2 mm, more particularly of between 1.2 mm and 1.8 mm. The inventors found that his way, at the same time
- suitable mechanical properties of the portion packaging can be achieved;
- suitable barrier properties (oxygen barrier; vapor barrier) can be achieved; and
- a manufacture by means of the herein described method is possible.

In some embodiments, where the fiber-reinforced composite material has a sheet shape.

In some embodiments, the fibers in the polymer matrix (and in the fiber-reinforced composite material, respectively) are essentially **randomly oriented**. Randomly oriented fibers, more specifically, can have arbitrary shapes and alignments. They can be curled, bent, wound and aligned in individual, randomized ways.

In other words, the fibers in the polymer matrix are disordered. This is in contrast to many other fiber-reinforced composite materials, where the fibers are all aligned and oriented essentially along one specific direction or, such as in case of a woven, oriented either along a first specific direction or perpendicularly thereto.

Accordingly, within the fiber-reinforced composite material, the fibers can be arranged without a pronounced preferred orientation; at least - in case of a fiber-reinforced composite material having a **sheet shape** - without a pronounced preferred orientation within the plane defined by the sheet. In other words, in that case, there is, within the plane, no pronounced alignment of the fibers along a specific direction.

When the fibers in the polymer matrix (and in the fiber-reinforced composite material, respectively) are essentially randomly shaped and arranged, mechanical properties of the fiber-reinforced composite material can be rather independent of direction.

Especially, in some embodiments, the fiber-reinforced composite material has a **sheet shape,** the sheet defining an **axis** perpendicular to the sheet, and mechanical properties of the fiber-reinforced composite material are essentially isotropic along all directions perpendicular to the axis. More particularly, mechanical properties of the fiber-reinforced composite material can be essentially isotropic along all directions.

The random fiber orientation (at least within the plane) has the advantage, that it balances mechanical stability of the material and of the envisaged portion package, respectively, on the one hand, and formability of the sheet-shaped material during the envisaged manufacturing method for the portion packaging, on the other hand, at least in combination with the herein described fiber lengths and the herein described sheet thicknesses and fiber volume portions. Said formability refers to bringing the wall-forming part into a working state as described below. A pronounced preferred orientation of the fibers (along one direction or along two mutually perpendicular directions) tends to create problems when trying to fold or wind or bend the sheet-shaped fiber-reinforced composite material.

The random fiber orientation (within the plane) can be achieved, in particular when manufacturing the fiber-reinforced composite material according to the herein described manufacturing method and more particularly when also selecting the fiber lengths as herein described and selecting the thickness of the fiber-reinforced composite material as herein described.

The above explanation of the fiber orientation with reference to the **axis** perpendicular to the sheet of course actually only applies locally, because in general, the sheet (and the fiber-reinforced composite material, respectively) could be bent or wound, such that in different regions, different axis orientations can occur.

Alternatively, one can more precisely say that in some embodiments, the fiber-reinforced composite material has a **sheet shape,** and, with the sheet being aligned parallel to a plane, the fibers are essentially **randomly oriented** at least regarding their orientation within the plane.

In some embodiments, at least 50% by volume, in particular at least 65% by volume, more particularly at least 70% by volume, of the fibers have a **length** of between 40 mm and 100 mm. This way, manufacturability on the one hand and suitable mechanical properties of the envisaged portion packaging can be achievable.

Alternatively or in addition, less than 30% by volume, in particular less than 20% by volume, more particularly less than 15% by volume of the fibers have a length smaller than 40 mm, and less than 30% by volume, in particular less than 20% by volume, more particularly less than 15% by volume of the fibers have a length larger than 100 mm.

In some embodiments, the fibers make up for between 10% and 60% by volume, in particular between 15% and 50% by volume, more particularly between 20% and 40% by volume, of the fiber-reinforced composite material. This way, manufacturability on the one hand and suitable mechanical properties of the envisaged portion packaging can be achievable.

As mentioned before, the inventors contemplated a specific way of **manufacturing** a fiber-reinforced composite material, and this method can in particular be used to manufacture the above-described fiber-reinforced composite material.

This **method** for **manufacturing a fiber-reinforced composite material** can more specifically comprise
- providing a **first sheet** of a **first polymer material;**
- providing a **second sheet** of a **second polymer material;**
- providing fibers;
- arranging the first sheet and the second sheet to face one another with the fibers between the first sheet and the second sheet;
- **bonding** the first sheet and the second sheet to one another with the fibers between the first sheet and the second sheet to **embed** the fibers in the first sheet and/or in the second sheet, in particular wherein the bonding comprises an application of **heat** to the first sheet and/or to the second sheet.

Therein, to at least 80% by weight, in particular to at least 90% by weight, the first polymer material is **biodegradable;** and/or to at least 80% by weight, in particular to at least 90% by weight, the second polymer material is **biodegradable;** and at least 80% by weight, in particular at least 90% by weight, of the fibers are **biodegradable.**

This way, an ecological fiber-reinforced composite material can be produced.

It is furthermore possible to achieve that the fiber-reinforced composite material comprises two zones, each predominantly comprised of a portion of the fibers and of the first and the second polymer material, respectively.

One can say that the fibers are, accordingly, embedded in a **polymer matrix** constituted by the first polymer material and the second polymer material. The first and second sheets form (or constitute), after the bonding, the polymer matrix of the fiber-reinforced composite material.

In some embodiments, the first polymer material and/or the second polymer material is essentially biodegradable.

In particular, by said bonding, the fiber-reinforced composite material can be obtained, especially in form of a **third sheet.** Accordingly, said bonding can result in the fiber-reinforced composite material - which can form a third sheet.

In some embodiments, the bonding the first sheet and the second sheet to one another comprises the application of heat to the first and/or to the second polymer material. The heat can more particularly be applied before said arranging of the first sheet and the second sheet to face one another with the fibers in between and/or while the first sheet and the second sheet are arranged this way.

In some embodiments, the first and/or to the second polymer material is a **thermoplast;** and in particular, the heat can be applied at least to the thermoplast. By the heat, deformability of the thermoplast increases, which can enable a strong bonding between the first and the second polymer material, and it can enable an uptake of the fibers into the thermoplast and/or a bonding between the fibers and the thermoplast, more particularly an enclosing of the fibers by the thermoplast.

The bonding can furthermore comprise an application of pressure, more particularly an application of pressure which presses the first and second sheets towards one another. This can enhance the bonding between the first and the second polymer material and/or can enhance a bonding between the fibers and one or both of the polymer materials.

A composition of the first polymer material can be identical to or different from a composition of the second polymer material. For example:
In some embodiments, both, the first polymer material and the second polymer material are one of the herein described water-soluble polymer materials, more specifically vinyl-alcohol copolymers; in particular for providing a strong oxygen barrier. In some embodiments, the composition of these water-soluble polymer materials are identical; in other embodiments, they have different compositions.

In some embodiments, the first polymer material is one of the herein described water-insoluble polymer materials (in particular for providing a strong vapor barrier), and the second polymer material is one of the herein described water-soluble polymer materials (in particular for providing a strong oxygen barrier); or vice versa. This can be particularly valuable in combination with an applied interior coating, cf. below where a corresponding portion packaging is described.

In some embodiments, arranging the first sheet and the second sheet to face one another with the fibers between the first sheet and the second sheet can, more specifally, comprise:
- **depositing** the fibers on the first sheet, in particular **trickling** the fibers onto the first sheet; and
- arranging the second sheet above the first sheet to face the first sheet with the fibers located between the first sheet and the second sheet.

In some embodiments of the method, the first sheet is provided in form of a **first stock,** in particular in form of a **first roll** to which at least a portion of the first sheet is wound, and the second sheet is provided in form of a **second stock,** in particular in form of a **second roll** to which at least a portion of the second sheet is wound. This can enable a very efficient manufacture of the fiber-reinforced composite material, such as in a roll-to-roll process.

The method can in particular further comprise
- retrieving the first sheet from the first stock;
- retrieving the second sheet from the second stock;
- adding a **third sheet** resulting from the bonding to a third stock.

The stocks can be implemented, e.g., as rolls. Accordingly:
In some embodiments, the method can more particularly comprise
- winding off the first sheet from the first roll;
- winding off the second sheet from the second roll;
- winding a **third sheet** resulting from the bonding to a third roll.

Alternatively, a stock can be embodied, e.g., as a layered continuous sheet.

For further processing of the third sheet - which can more particularly constitute the fiber-reinforced composite material - the third sheet can be retrieved from the third stock and can be wound off the third roll, respectively.

The herein described use is a **use** of a fiber-reinforced composite material as herein described or of a fiber-reinforced composite material manufactured as herein described, as a material forming at least a portion of a **wall** of at least a **part** of a **portion packaging** for packaging an extraction material for preparation of a beverage from the extraction material (e.g., gound coffee) and an extraction liquid (e.g., hot water). As has been described above, the fiber-reinforced composite material can have properties particularly well suitable for packaging an extraction material such as coffee, more particularly ground coffee (coffee powder) in form of a portion package to be used in a brewing module (cf. above).

We further describe a portion packaging, more precisely a **portion packaging** for packaging an **extraction material** for preparation of a beverage from the extraction material and an extraction liquid, wherein the portion packaging comprises a **first part** comprising two or more **wall sections** of the portion packaging, and the first part comprises
- a **wall-forming part** comprising two or more **sheet sections,** each of the wall sections comprising a respective one of the sheet sections.

Furthermore, each of the sheet sections comprises, in particular is made of, a fiber-reinforced composite material as herein described, or a fiber-reinforced composite material manufactured as herein described.

Thus, the portion packaging can be very ecological and at the same time suitable for the purpose, in particular in terms of providing a suitable oxygen barrier and a suitable vapor barrier while providing suitable mechanical properties.

Using the herein proposed materials, the portion packaging can be **biodegradable** to at least 80% by weight, in particular to at least 90% by weight, more particularly to at least 95% by weight. And it can even be compostable, more particularly home-compostable, to at least 80% by weight, in particular to at least 90% by weight, more particularly to at least 95% by weight.

In the present disclosure, **compostable** can more specifically mean home compostable.

In the present disclosure, **"biodegradable"** can, more specifically, mean biologically degradable according to the European standard EN 13432 (more particularly: EN 13432:2004). In addition, or as an alternative, it can mean biologically degradable according to the European standard EN 14995 (more particularly EN 14995:2006). Thus "biodegradable" especially can refer to "biologically degradable" according to EN 13432 and/or according to EN 14995. In the present disclosure, "compostable" or "home compostable" can, more specifically, mean compostable or home compostable according to the European standard EN 13432 (more particularly: EN 13432:2004) for packaging and/or according to the European standard EN14995 (more particularly EN 14995:2006) for plastics/synthetic materials.

Vinyl alcohol copolymers, such as the herein described ones, can have the advantage that it can form an oxygen barrier. Considering their water solubility, it can be of advantage to consider a vinyl alcohol copolymer which has a relatively low water solubility - because of the brewing process in which it may be exposed to hot water (for a short time). Accordingly, it can be of advantage to consider a vinyl alcohol copolymer which has a high degree of hydrolysis, e.g., at least 98 mol%, in particular at least 99 mol%, more particularly at least 99.5 mol%. However, the herein proposed interior coating can also be made of a water-insoluble polymer material such as one of the herein described ones. Then, such a high degree of hydrolysis is still possible but less useful.

If a herein described water-insoluble polymer material is selected, one can expose it to hot water during the brewing process, and it can readily withstand the same. Furthermore, it can provide a water vapor barrier.

These polymer materials can be used as injection molding materials, and they can provide a desired stability..

Using the herein proposed materials, the portion packaging can exhibit an **oxygen transmission rate (OTR),** at 23°C and a relative humidity of 50%, of at most 3 cm³/m² per day, in particular of at most 1 cm³/m² per day, more particularly of at most 0.2 cm³/m² per day. This can effect an increased shelf life of the portion packages.

Using the herein proposed materials, the portion packaging can exhibit a **water vapor transmission rate (WVTR),** at 23°C and a relative humidity of 85%, of at most 25 g/m² per day, in particular of at most 10 g/m² per day, more particularly of at most 5 g/m² per day, even more particularly of at most 2 g/m² per day. The WVTR in this disclosure can in particular be determined according to ISO 15106-2 (more particularly: ISO 15106-2:2015). This can effect an increased shelf life of the portion packages.

Furthermore, the first part can define an **interior space,** the interior space being **open** at one side referred to as **open side** and being otherwise delimited, in an airtight manner, by **delimitations** formed by the first part, the delimitations comprising the sheet sections.

The interior space can be, e.g., a space for uptake of the extraction material.

In some embodiments, the interior space is delimited by a combination of the wall-forming part and one or more injection molding materials as described further below. The interior space, accordingly, can be partially enclosed (completely enclosed except for the open side) by a combination of the wall-forming part and the one or more injection molding materials.

"Open" in this regard means that the interior space is at the open side not limited by the first part. However, regarding the portion packaging, the open side may be closed, e.g., by a second part of the portion packaging, such as by a lid part, e.g., by a the lid part embodied as a foil, more particularly, as a foil for sealing the portion packaging (after introducing the extraction material into the first part and, more particularly into the interior space).

In some embodiments, the interior space is delimited, in an airtight manner,
- at an **end side** which is opposite the open side; and
- **circumferentially** between the open side and the end side.

More particularly, in some embodiments, the two or more sheet sections comprise
- a **first sheet section** delimiting the interior space at the end side, in particular wherein the first sheet section forms an **end wall** of the first part; and
- a **set** of one or more **second sheet sections,** delimiting the interior space circumferentially between the open side and the end side, in particular wherein the set of one or more second sheet sections forms a **circumferential side wall** of the first part.

In some embodiments, the wall-forming part comprises a **contiguous piece** of the herein described fiber-reinforced composite material **devoid of openings** extending through it. For example, e.g., in the first type of embodiments described below, the wall-forming part can essentially be a contiguous piece of the herein described fiber-reinforced composite material devoid of openings extending through it. Or, in other cases, e.g., in the second type of embodiments described below, the wall-forming part can essentially be a plurality of contiguous pieces of the herein described fiber-reinforced composite material devoid of openings extending therethrough, in particular two such pieces.

In a **first type** of embodiments, the wall-forming part constitutes a **single contiguous part,** more particularly a single contiguous part of the herein described fiber-reinforced composite material. In particular, the wall-forming part can constitute a single **wall-forming sheet,** in other words: the wall-forming part can comprise no more than a single wall-forming sheet. For example, the wall-forming part can be a pre-cut piece of the herein described fiber-reinforced composite material. The pre-cut piece of the herein described fiber-reinforced composite material can furthermore be scored or pre-folded. This way, merely a single piece (the single wall-forming sheet) has to be introduced into an injection molding tool for applying the filling material and/or the coating material in an injection molding step (cf. below). This can facilitate the insertion of the wall-forming piece into the injection molding tool.

In a **second type** of embodiments, the wall-forming part constitutes a **set of at least two sub-parts,** in particular of no more than exactly two sub-parts, each of the sub-parts constituting a separate single contiguous part, more particularly a single contiguous part of the herein described fiber-reinforced composite material. In particular, the wall-forming part can comprise two or more **wall-forming sheets.** For example, the wall-forming part can be comprised of two pre-cut pieces of the herein described fiber-reinforced composite material (forming a wall-forming sheet each). This way, two pieces (i.e. the two wall-forming sheets) have to be introduced into an injection molding tool for applying the filling material and/or the coating material in an injection molding step (cf. below). But the number of **gaps** between the adjoining edges of each of the pairs of adjoining edges and/or their overall length may be smaller than in case of merely a single wall-forming sheet, so that interconnecting the adjoining edges and/or filling the gaps may be simpler than in case of merely a single wall-forming sheet embodying the wall-forming part.

Of course, in further embodiments, the wall-forming part can comprise **three or more sub-parts,** and three or more separate wall-forming sheets.

A wall-forming sheet can in particular be contiguous and be **devoid of openings** extending through it.

In some embodiments, the wall-forming part together with the one or more injection molding materials described below forms a **continuous wall body** which is **devoid of openings** extending through the wall body.

In some embodiments, the first part is a **main part** of the portion packaging; in particular the main part can be a part of the portion packaging for receiving the extraction material. It can define an interior space for uptake of the extraction material.

In some embodiments, the first part is a **lid part** of the portion packaging. In particular the lid part can be a part of the portion packging to be sealed onto the main part to completely close, in particular in an airtight manner, the portion packaging and portion package, respectively.

In some embodiments, the portion packaging comprises, in addition to the first part, a **second part.** In particular the second part can be the lid part in case the first part is the main part; or, vice versa, the second part can be the main part in case the first part is the lid part.

In some embodiments, the second part is manufactured as herein described for the first part.

In some embodiments, the second part is **foil,** in particular a foil for sealing the first part and the portion packaging, respectively. This can in particular be the case when the first part is the main part.

In some embodiments, the first part comprises an **interior coating** made of a **coating material,** the interior coating facing the interior space and comprising a coating on the wall-forming part, more particularly on the sheet sections. This way, the portion packaging can be functionalized, e.g., for creating a suitable interior surface of the portion packaging. E.g., the coating material can be water-insoluble, at least to some extent.

Furthermore, the coating material can be biodegradable to at least 80% by weight, in particular to at least 90% by weight. It can even be completely biodegradable. This way, the biodegradability of the portion packaging is not compromised by the coating material.

In some embodiments, the **coating material,** to at least 50% by weight, in particular to at least 80% by weight, more particularly to essentially 100% by weight, is comprised of a **water-insoluble** polymer material, more specifically of one of
- a poly(lactic acid) (PLA);
- a polyhydroxyalkanoate (PHA), in particular a hydroxyalkanoate copolymer, more particularly a hydroxybutyrate (PHB) or a hydroxybutyrate copolymer;
- a polybutylene succinate (PBS);
or of a mixture of two or more of
- a poly(lactic acid) (PLA);
- a polyhydroxyalkanoate (PHA), in particular a hydroxyalkanoate copolymer, more particularly a hydroxybutyrate (PHB) or a hydroxybutyrate copolymer;
- a polybutylene succinate (PBS).

To these, we herein also refer as "**the herein described water-insoluble polymer materials**".

This way, the portion packaging better resists the hot water during the brewing process; and the biodegradability of the portion packaging is not compromised by the coating material.

In some embodiments, the interior coating is an injection molded interior coating. I.e. the interior coating can be applied in an injection molding process, as will be described in more detail below.

The coating material can be, with reference to the manufacturing method described below, identified with the first injection molding material.

In some embodiments, the portion packaging comprises said interior coating, and the fiber-reinforced composite material (of the portion packaging) comprises
- a first zone comprising a portion of the fibers and one of the herein described water-insoluble polymer materials; and
- a second zone comprising a portion (in particular the remaining portion) of the fibers and one of the herein described water-soluble polymer materials, more specifically a vinyl-alcohol copolymer;
wherein the second zone is arranged between first zone and the interior coating, and wherein the coating material is one of the herein described water-insoluble polymer materials. The second zone can be arranged between the first zone and the interior coating.

In such embodiments, the second zone, more particularly the water-soluble polymer material (which can be identified with the second polymer material), can provide a suitable oxygen barrier function, while being protected from water (or water vapor)
- on one side by the first zone, more particularly by the water-insoluble polymer material (which can be identified with the first polymer material); and
- on the other side by the interior coating (i.e. by the coating material).

Both, the interior coating (i.e. the coating material) and the first zone, more particularly the water-insoluble polymer material (which can be identified with the first polymer material) provide a water vapor barrier functionality - which prevents water vapor from entering the interior space, thus protecting the packaged product (the extraction material). In particular, the interior coating (and the coating material, respectively) can protect, at least to a large extent, the second zone, more particularly the water-soluble polymer material, from getting into contact with (hot) water during a brewing process - in which (hot) water enters the interior space.

Furthermore, the fibers can in particular be comprised of cellulose fibers to at least 80% by weight, e.g., the fibers can essentially be cellulose fibers. This way, an environmentally friendly compostable portion packaging can be obtained which can have excellent barrier properties, thus enabling to ensure a high quality and long shelf life of a packaged product.

In some embodiments, the wall-forming part comprises one or more **pairs of adjoining edges,** each of the sheet sections having at least one **edge** forming, together with an **adjoining edge** of a neighboring one of the sheet sections, one of the pairs of adjoining edges, the portion packaging comprising a **filling material interconnecting** the adjoining edges of each of the pairs of adjoining edges and closing any **gap** between the adjoining edges of each of the pairs of adjoining edges, in particular in an airtight manner. Therein, the filling material can in particular be biodegradable to at least 80% by weight, in particular to at least 90% by weight.

The filling material can also mechanically stabilize the portion packaging and contribute to its barrier properties
The filling material can be, with reference to the manufacturing method described below, identified with the second injection molding material.

In some embodiments, a composition of the filling material is different from a composition of the coating material. For example, the two materials can be applied in a two-component injection molding process, in particular wherein the wall-forming part is inserted in the injection molding tool during the injection molding similarly as in so-called "in-mold labelling", as will be described in more detail below.

In particular, the **coating material** can be one of the herein described water-insoluble polymer materials, whereas the **filling material** can be one of the herein described water-soluble polymer materials. In particular when this is combined with a fiber-reinforced composite material comprising one of the herein described water-soluble polymer materials, e.g., in or of at least one of the first and second polymer materials and/or as a layer of the polymer matrix, a good combination of oxygen barrier functionality on the one hand and vapor barrier functionality plus water resistance during a brewing process on the other hand can be achievable.

In some embodiments, a composition of the filling material is identical to a composition of the coating material. For example, the coating and the gap filling can be accomplished in one and the same single-component injection molding process. In particular, the injection molding material (forming both, the coating material and the filling material) can comprise one of the herein described water-insoluble polymer materials - for achieving a vapor barrier functionality and a suitable water resistance during a brewing process. E.g., the coating material can essentially be one of the herein described water-insoluble polymer materials. Or, in order to achieve, in addition an oxygen barrier functionality (especially also in the gaps), the injection molding material can comprise both, one of the herein described water-insoluble polymer materials and one of the herein described water-soluble polymer materials, i.e. a mixture of these. In particular, the injection molding material can comprise between 10% and 90% by weight, more particularly between 20% and 80% by weight, of one of the herein described water-insoluble polymer materials, one of the herein described water-soluble polymer materials making up for essentially the rest.

In some embodiments, the filling material and the coating material are applied in one and the same injection molding process. In accordance with the above, this can be a single-component injection molding process (especially in case the coating material and the filling material are of identical composition) or can be a two-component injection molding process (especially in case the coating material and the filling material have different compositions).

In some embodiments, the interior space is, except for the open side, completely delimited by the coating material, or by the coating material in combination with the filling material. In particular, the interior space can be, except for the open side, completely delimited by injection molding material.

Accordingly, the portion packaging can comprise a **delimiting material** completely delimiting the interior space, wherein the delimiting material can be identical to the coating material or identical to a combination of the coating material and the filling material. The delimiting material can interface the interior space. And in particular, the delimiting material can be the injection molding material (applied in an injection molding process as described below).

Furthermore, we now describe a **method** for manufacturing a **portion packaging** for packaging an extraction material for preparation of a beverage from the extraction material and an extraction liquid. The method can in particular be used for manufacturing a portion packaging as herein described.

With reference to the method, the portion packaging comprises a **first part** comprising two or more **wall sections** of the portion packaging, the first part defines an **interior space** which is **open** at one side referred to as **open side** and is otherwise delimited, in particular in an airtight manner, by **delimitations** (not to be confused with the delimiting materials) formed by the first part, wherein the method comprises
- providing a **wall-forming part** comprising two or more **sheet sections,** the delimitations comprising the sheet sections;
- bringing the wall-forming part into a **working state** comprising introducing the wall-forming part into an **injection molding tool;**
- carrying out an **injection molding step** with one or more **injection molding materials** and by means of the injection molding tool with the wall-forming part in the working state.

Furthermore, each of the sheet sections comprises, in particular is made of, a fiber-reinforced composite material as herein described or of a fiber-reinforced composite material manufactured as herein described.

In the working state, the wall-forming part comprises one or more **pairs of adjoining edges,** each of the sheet sections having at least one **edge** forming, together with an **adjoining edge** of a neighboring one of the sheet sections, one of the pairs of adjoining edges. And each of the wall sections comprises a respective one of the sheet sections.

The injection molding step comprises one or both of
- a **coating step;**
- an **interconnecting step.**

Therein, the coating step comprises producing an **interior coating** from a **first** one of the injection molding materials (corresponding to the coating material described above), the interior coating comprising a coating on the wall-forming part, more particularly on the sheet sections, and faces the interior space. In particular, the first injection molding material can be biodegradable to at least 80% by weight, in particular to at least 90% by weight. More particularly, the first injection molding material can be essentially completely biodegradable.

And the interconnecting step comprises **interconnecting** the adjoining edges of each of the pairs of adjoining edges and closing any **gap** between the adjoining edges of each of the pairs of adjoining edges, in particular in an airtight manner, by means of a **second** one of the injection molding materials (corresponding to the filling material described above) which can be identical to or different from the first injection molding material. In particular, the second injection molding material is biodegradable to at least 80% by weight, more particularly to at least 90% by weight. Especially, the second injection molding material can be essentially completely biodegradable.

The delimitations can comprise the interior coating (and thus the coating material).

The delimitations can comprise the second injection molding material (filling material).

The suggested injection molding step is, in some way, a bit similar to a process known as "in-mold labelling". In such a process, however, a small label is inserted in the injection molding tool, and the by far largest volume portion of the product is made of the injection molding material - whereas in the herein described injection molding step, most of the material volume of the portion packaging will usually be taken by the fiber-reinforced composite material, while only a minor portion of the volume is taken by the injection molding material.

The wall-forming part, in particular, can be initially essentially flat or at least unfolded. I.e. before bringing the wall-forming part into the working state, it can be flat and/or unfolded.

In some embodiments, the wall-forming part is produced from a sheet of the fiber-reinforced composite material by separating the wall-forming part from a remaining portion of the sheet of the fiber-reinforced composite material, in particular by cutting the wall-forming part from the fiber-reinforced composite material.

In some embodiments, bringing the wall-forming part into the **working state** takes place at an elevated temperature; e.g., heat can be applied to the wall-forming before and/or while bringing the wall-forming part into the working state. This can facilitate winding or folding the fiber-reinforced composite material - without damaging it or requiring high forces for doing so.

In some embodiments, bringing the wall-forming part into the working state comprises, for at least one, in particular for each one, of the pairs of adj oining edges:
- bringing closer to one another the edges which, in the working state, form a respective one of the pairs of adjoining edges.

For example, the wall-forming part can initially be flat, e.g., be an unfolded, pre-cut piece of a sheet of the fiber-reinforced composite material. And in this flat state, at least some of the edges which, in the working state, form a pair of adjoining edges, are at an angle to one another. Then, for bringing the wall-forming part into the working state, the wall-forming part can be reshaped, in particular without adding or removing material from the wall-forming part, e.g., to reduce an angle between the edges which, in the working state, form a pair of adjoining edges. This can be done, e.g., to align said edges substantially in parallel to one another and/or to bring at least some of the sheet sections at an angle with respect to at least another one of the sheet sections. The initially flat item can be transformed into an essentially three-dimensionally shaped item this way.

In some embodiments, bringing the wall-forming part into the working state comprises
- **folding** the wall-forming part.

Folding can be a suitable and efficient process contributing to bringing the wall-forming part into the working state.

For clarification: folding the wall-forming part can mean folding a sub-part of the wall-forming part. However, folding can be particularly useful and efficient, also in case the wall-forming part constitutes merely a single contiguous part.

In some embodiments, bringing the wall-forming part into the working state comprises
- **winding** the wall-forming part, in particular winding the wall-forming part about an **axis** defined by the first part.

Winding can be a suitable and efficient process contributing to bringing the wall-forming part into the working state.

For clarification: winding the wall-forming part can mean winding a sub-part of the wall-forming part. Winding can be particularly useful and efficient, in case the wall-forming part constitutes a set of (at least) two sub-parts, each of the sub-parts constituting a separate single contiguous part; and more particularly in case a **first** of the two sub-parts forms, in the working state, a **circumferential side wall** of the first part, and a **second** of the two sub-parts forms, in the working state, an **end wall** of the first part. In this case, the circumferential side wall can be wound during bringing the wall-forming part into the working state, e.g., it can be wound to form a section of a cylinder barrel or a section of an envelope of a cone. And more specifically, in the working state, an edge of the end wall and an edge of the circumferential side wall can form a pair of adjoining edges.

In some embodiments, in the working state, each of the sheet sections is in **contact** with the injection molding tool, more particularly with a respective surface of the injection molding tool.

In some embodiments, the injection molding step comprises or essentially is a **single-component injection molding process,** in which both, the interconnecting the adjoining edges and the interior coating is accomplished. The one and only injection molding material in this case can comprise (for achieving an improved water resistance during a brewing process and a vapor barrier functionality), at least in part, one of the herein described water-insoluble polymer materials, but it can also be essentially comprised one of the herein described water-insoluble polymer materials. For effecting an oxygen barrier, specifically in the gaps between adjoining edges, the one and only injection molding material can comprise, in addition, one of the herein described water-soluble polymer materials.

In some embodiments, the injection molding step comprises or essentially is a **multi-** or, more specifically, **a two-component injection molding process,** in which the first injection molding material corresponds to the described coating material, thus constituting the interior coating, and the second injection molding material corresponds to the described filling material, thus interconnecting the adjoining edges.

The first injection molding material in this case can comprise (for achieving an improved water resistance during a brewing process and a vapor barrier functionality), at least in part, one of the herein described water-insoluble polymer materials, but it can also be essentially comprised one of the herein described water-insoluble polymer materials.

For effecting an oxygen barrier, especially in the gaps between adjoining edges, the second injection molding material can comprise one of the herein described water-soluble polymer materials, e.g., to at last 50% by weight, but it can also be essentially comprised one of the herein described water-soluble polymer materials.

Further, we describe a **method** for manufacturing a **portion package,** in particular a portion package comprising a portion packaging as herein described or comprising a portion packaging manufactured according to a method herin described. The method more particularly comprises
- providing a portion packaging as herein described or a portion packaging manufactured as herein described; wherein the portion packaging comprises, in addition to the first part, a **second part;**
- introducing an **extraction material** into the first part and/or into the second part;
- **sealing** the portion packaging, comprising **bonding** the first part and the second part to one another, in particular in an airtight manner.

For example, the first part can be a main part, and the second part can be a lid part.

In some embodiments, manufacturing the portion package comprises **closing** the open side by the second part of the portion packaging. The open side can be closed, e.g., by a foil or by a lid also comprising at least one wall comprising the herein described fiber-reinforced composite material.

In some embodiments, the wall-forming part comprises one or more sealing sections for facilitating the sealing which takes place in the sealing sections. Furthermore, an injection molding material, more particularly the coating material, can be applied also on the sealing sections; this can be accomplished in the injection molding process in which also the interior coating is produced.

In some embodiments, the sealing (and the bonding, respectively) comprises application of a **bonding agent,** such as a glue, to the first part and/or to the second part. In particular, the bonding agent can be biodegradable and/or water-soluble; this way, the recyclability of the portion package (and of the portion packaging) may be unimpeded by the bonding agent.

In some embodiments, the bonding comprises application of heat.

In some embodiments, the bonding comprises application of ultrasound energy.

In some embodiments, the second part is manufactured according to one of the processes herein described for the first part. For example, the first and second parts can comprise the same fiber-reinforced composite material.

As will be readily understood, features mentioned herein with respect to a method can analogously apply for a respective described device (portion packaging or portion package) and material (fiber-reinforced composite material) as well. And, vice versa, features mentioned herein with respect to a device (portion packaging or portion package) or material (fiber-reinforced composite material) can analogously apply for a respective described method as well. The achievable effects correspond to one another.

Further embodiments and advantages emerge from the following description and the enclosed figures and from the dependent claims.

Below, the invention is described in more detail by means of examples and the included drawings. In the drawings, same reference numerals refer to same or analogous elements. The figures show schematically:
- Fig. 1: a portion packaging comprising a main part and a lid part, in a side view;
- Fig. 2: the lid part of the portion packaging of Fig. 1 in a perspective view;
- Fig. 3a: a wall-forming part usable for producing the main part of the portion packaging of Fig. 1, in a top view;
- Fig. 3b: the wall-forming part of Fig. 3a in a folded state, in a perspective view;
- Fig. 3c: a main part of a portion packaging comprising the wall-forming part of Fig. 3a and a filling material, in a perspective view;
- Fig. 3d: an alternative way of embodying the filling material for the main part of Fig. 3c, in a perspective view;
- Fig. 3e: another alternative way of embodying the filling material for the main part of Fig. 3c, in a perspective view;
- Fig. 4a: an injection molding tool with a wall-forming part, in a cross-sectional view, strongly schematized;
- Fig. 4b: the injection molding tool with the wall-forming part of Fig. 6a in a working state, in a cross-sectional view, strongly schematized.
- Fig. 5a: a wall-forming part comprising two sub-parts, in a top view;
- Fig. 5b: the wall-forming part of Fig. 5a in a particular state, in a perspective view;
- Fig. 5c: a main part of a portion packaging comprising the wall-forming part of Fig. 5a and a coating material and a filling material, in a perspective view;
- Fig. 5d: the main part of Fig. 5c, with filled-in extraction material, in a perspective view;
- Fig. 5e: a portion package comprising the main part of Fig. 5c, in a perspective view;
- Fig. 6a: a wall-forming part, in a top view;
- Fig. 6b: the wall-forming part of Fig. 6a in a folded state, in a perspective view;
- Fig. 6c: a main part of a portion packaging comprising the wall-forming part of Fig. 6a and a filling material, in a perspective view;
- Fig. 7a: a wall-forming part usable for producing a main part of a portion packaging, comprising sealing sections, in a top view;
- Fig. 7b: the wall-forming part of Fig. 7a in a folded state, in a top view;
- Fig. 8a: a wall-forming part usable for producing a main part of a portion packaging, comprising sealing sections, in a top view;
- Fig. 8b: the wall-forming part of Fig. 8a in a folded state, in a top view
- Fig. 9a: a wall-forming part usable for producing a main part of a portion packaging, comprising sealing sections, in a top view;
- Fig. 10: a strongly schematized illustration of a method for manufacturing a sheet-shaped fiber-reinforced composite material, in a side-view;
- Fig. 11: a cross-section perpendicular to the sheet plane through the fiber-reinforced composite material, strongly schematized;
- Fig. 12: a top-view onto a cross-section through a zone of a fiber-reinforced composite material, strongly schematized;
- Fig. 13: a top-view onto a cross-section through a zone of a fiber-reinforced composite material, strongly schematized;
- Fig. 14: a top-view onto a cross-section through a zone of a fiber-reinforced composite material, strongly schematized;
- Fig. 15: a cross-section through a detail of a portion packaging illustrating a pair of adjoining edges and filling material and coating material.

The described embodiments are meant as examples or for clarifying the invention and shall not limit the invention.

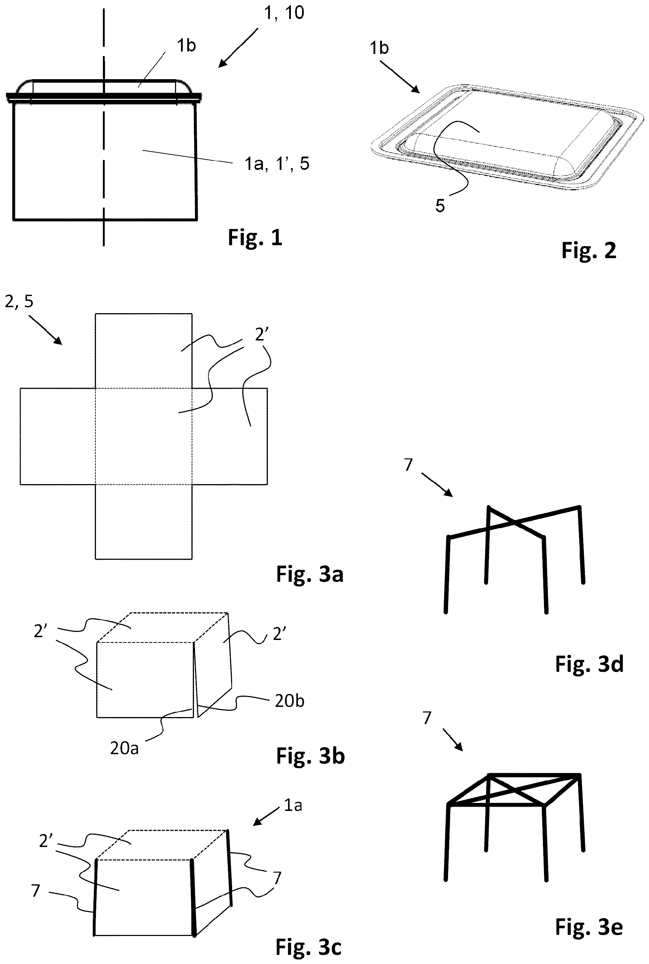

Fig. 1 illustrates a portion packaging 1 comprising a main part 1a and a lid part 1b, in a side view. Fig. 1 can, at the same time be considered to show a portion package 10. Portion package 10 can be a capsule-type portion package containing ground coffee as an extraction material. Main part 1a has five wall sections, in Fig. 1 one of these is visible. The wall sections comprise a fiber-reinforced composite material 5 which is described in more detail further below.

Fig. 2 illustrates lid part 1b of portion packaging 1 of Fig. 1 in a perspective view. It can, too, comprise the fiber-reinforced composite material 5.

Figs. 3a to 3c illustrate a way of manufacturing a portion packaging, such as portion packaging 1 of Fig. 1.

Fig. 3a illustrates, in a top view, a wall-forming part 2 which is usable, e.g., for producing the main part 1a of the portion packaging 1 of Fig. 1. Wall-forming part 2 is a pre-cut contiguous piece of sheet. It may be scored or pre-folded or the like, as indicated by the dashed lines, in order to facilitate folding the wall-forming part 2.

Wall-forming part 2 may be essentially comprised of the fiber-reinforced composite material 5 which can be essentially biodegradable. This way, the wall-forming part 2 and thus the portion packaging may be very ecological. And, on the other hand, it may be suitable for the purpose, in particular mechanically and in terms of providing a suitable oxygen barrier and a suitable vapor barrier, thus enabling a long shelf life of the portion package 1.

Wall-forming part 2 comprises five sheet sections 2' some of which are indicated in Fig. 3a while all of them are visible in Fig. 3a. Each of the sheet sections 2' can form a respective one of the wall sections 1' of the portion packaging.

During the manufacture, wall-forming part 2 can be folded, e.g., during inserting it into an injection molding tool.

Fig. 3b illustrates, in a perspective view, the wall-forming part 2 of Fig. 3a in a folded state. It comprises four pairs of adjoining edges 20a, 20b, one of which is visible in Fig. 3b. For better visibility, the edges 20a, 20b are drawn in Fig. 3b as being at a small angle with respect to one another.

Next, gaps present between pairs of adjoining edges 20a, 20b, are filled using injection molding. Accordingly, the injection molding material can be considered a filling material.

Fig. 3c illustrates, in a perspective view, a main part 1a of a portion packaging comprising the wall-forming part of Figs. 3a, 3b and injection molding material 7.

One of the sheet sections 2' of wall-forming part 2 forms an end wall of main part 1a, the other four sheet sections 2' together form a circumferential side wall of the main part 1a.

On the one hand, injection molding material 7 can close any gap (cf. Fig. 3b) between the edges 20a, 20b of any of the pairs of adjoining edges. This way, an interior space (not visible in Fig. 3c; e.g., for uptake of the extraction material), which is defined by main part 1a, can be delimited in an airtight manner, except for an open side which is not visible in Fig. 3c and which points downwards in Fig. 3c.

The injection molding material 7 of Fig. 3c forms four bar-shaped constituents three of which are visible in Fig. 3c, indicated by thick lines.

On the one hand, injection molding material 7 can mechanically stabilize main part 1a. This can be accomplished by the bar-shaped constituents closing the gaps and also by further bar-shaped constituents (not present in Fig. 3c).

Figs. 3d and 3e illustrate, in a perspective view, alternative ways of embodying the filling material 7 for the main part 1a of Fig. 3c.

Besides filling the gaps, further injection molding material could be used to create a complete inside coating (not shown in Figs. 3a to 3e).

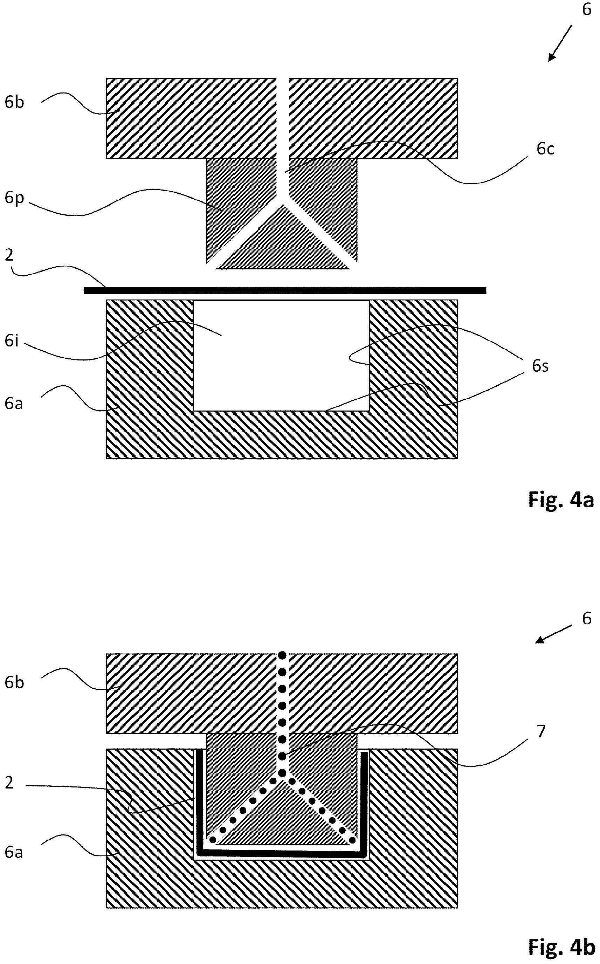

Figs. 4a, 4b further illustrate a manufacturing method for manufacture of a portion packaging, such as the one of Figs. 1 to 3, emphasizing the injection molding.

Fig. 4a illustrates, in a cross-sectional view and strongly schematized, an injection molding tool 6 with a wall-forming part 2, such as with the wall-forming part 2 of Fig. 3a. Injection molding tool 6 comprises a first tool part 6a and a second tool part 6b. Wall-forming part 2 is still flat, e.g., like illustrated in Fig. 3a. First tool part 6a comprises an inner volume 6i delimited by surfaces 6s two of which are indicated in Fig. 4a. Second tool part 6b comprises one or more channels 6c for guiding injection molding material, and comprises a protruding portion 6p adapted to fit into inner volume 6i.

Fig. 4b illustrates, also in a cross-sectional view and strongly schematized, the injection molding tool 6 of Fig. 4a, with the wall-forming part 2 in a working state. In the working state, wall-forming part 2 is folded substantially in accordance with the main part 1a to be manufactured and thus, folded approximately as illustrated in Fig. 3b. Each of the sheet sections of wall-forming part 2 is in contact with a respective surface 6s of injection molding tool 6.

Furthermore, protruding portion 6p has been introduced into inner volume 6i. And, for example, thereby, wall-forming part 2 may have been folded.

It would also be possible to suitably fold wall-forming part 2 already before inserting it into injection molding tool 6 (not illustrated).

Furthermore, the dotted lines in Fig. 4b symbolize the injection molding material 7 used to fill the gaps and constitute the filling material (cf. Figs. 3c to 3e). E.g., basically similarly to known "in-mold labelling" processes, a device (here: the main part 1a) is produced from an item (here: the wall-forming part 2) inside the injection molding tool 6 and injection molding material 7 connecting to the item.

It is also possible (though not illustrated here), to injection mold more than a single material, e.g., a first injection molding material and a - different - second injection molding material, such as is known from two-component injection molding.

When protruding portion 6p i introduced into inner volume 6i with wall-forming part 2 introduced, volumes, in particular channel-like volumes for uptake of injection molding material 7 are formed which substantially define the shape of injection molding material 7.

Further details need not be described, as injection molding and more particularly also in-mold labelling and two-component injection molding are a well-known processes. However, in contrast to standard "in-mold labelling" processes, most of the produced device (i.e. here: of the main part 1a) is not made up for by the injection molding material 7 but is made up for by inserted item (here: the wall-forming part 2).

The injection molding material 7 also is a polymer material, e.g., PVOH. This can contribute to environmental friendliness of the produced portion packaging. Suitable polymer materials have been described herein further above (biodegradable polymers, such that the herein described water-soluble polymer materials and water-insoluble polymer materials and mixtures thereof).

This way, a main part of a substantially cubic or cuboidal coffee capsule can be produced.

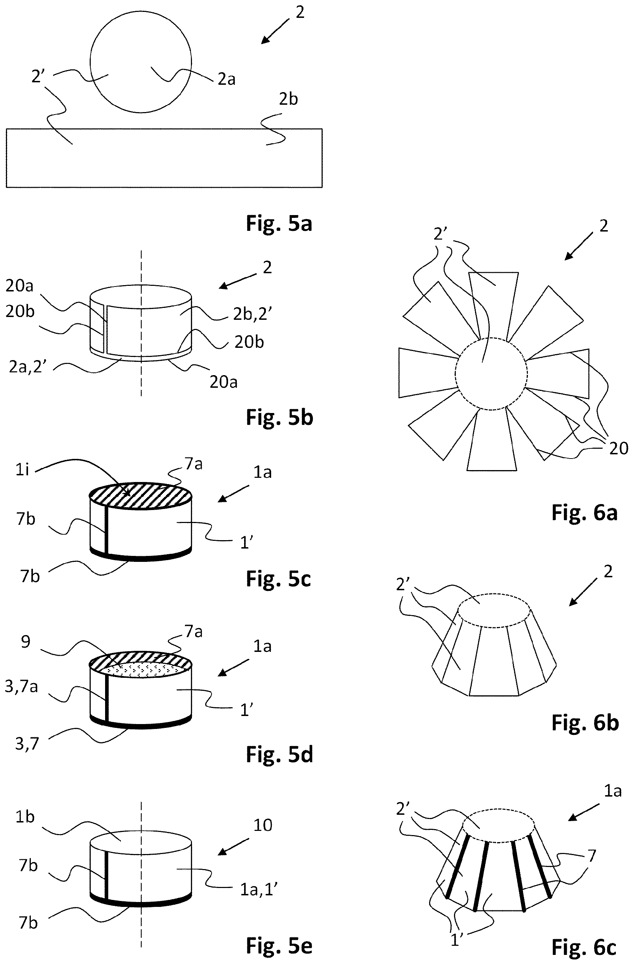

Figs. 5a to 5e and 6a to 6c illustrate further examples of wall-forming parts 2 and corresponding injection molding material. As can be seen, this can result in differently shaped main parts 1a.

In case of Figs. 5a to 5e, the wall-forming part 2 comprises a first sub-part 2a and a second sub-part 2b. Each of the sub-parts 2a, 2b is a pre-cut piece of fiber-reinforced composite material 5.

Each of the two sub-parts 2a, 2b forms one sheet section 2' forming a respective one of the wall sections 1' of main part 1a.

Fig. 5a illustrates, in a top view, the wall-forming part 2 comprising the two sub-parts 2a, 2b. In order to bring the wall-forming part 2 into a suitable shape for manufacturing the main part 1a, sub-part 2b and its sheet section 2', respectively, is wound, in particular would about an axis as indicated in Figs. 5b and 5e by a dashed line. And furthermore, the two sub-parts 2a, 2b are suitably arranged with respect to one another.

Fig. 5b illustrates, in a perspective view, the wall-forming part 2 of Fig. 5a in the particular state just described. In the working state (not illustrated here), the sub-parts 2a, 2b and their respective sheet section 2', respectively, are arranged approximately this way, but in an injection molding tool.

The wall-forming part 2 comprises two pairs of adjoining edges 20a, 20b. For better visibility, the edges 20a, 20b are drawn in Fig. 5b as being clearly distant from one another.

Next, using injection molding, gaps between the respective edges 20a, 20b of each of the pairs of adjoining edges, are filled by injection molding material 7b, thus filling the gaps; and the inside surfaces of sub-parts 2a, 2b are coated with an injection molding material 7a, thus constituting a coating material.

Fig. 5c illustrates, in a perspective view, the main part 1a of a corresponding portion packaging 1 comprising the wall-forming part 2 of Fig. 5a and the corresponding injection molding materials 7a, 7b.

The interior space 1i defined by main part 1a is visible in Fig. 5c. It is delimited by injection molding material 7a (coating material), except for the open side (pointing upwards in Fig. 5c). Injection molding material 7a (coating material) thus interfaces the interior space 1i.

Next, an extraction material 9, such as gound coffee, is filled into the interior space 1i.

Fig. 5d illustrates, in a perspective view, the main part 1a of Fig. 5c, with filled-in extraction material 9. Extraction material 9 is enclosed by main part 1a plus the injection molding materials 7a, 7b in an airtight manner, except for the open side (which faces up in Fig. 5d).

Next, a lid part, e.g., a foil, is sealed to main part 1a, so as to completely enclose, in an airtight manner, the extraction material 9.

Fig. 5e illustrates, in a perspective view, the so-obtained portion package 1 comprising the main part 2 of Fig. 5c.

This way, a substantially cylindrical coffee capsule can be produced.

In case of Figs. 6a to 6c, the wall-forming part 2 comprises no more than a single pre-cut piece of a sheet material which, e.g., can be essentially comprised of the fiber-reinforced composite material, such as herein described before.

The wall-forming part 2 forms nine sheet sections 2' (some of which are indicated in Fig. 6a, all being visible in Fig. 6a), each section forming a respective one of the wall sections 1' of main part 1a.

Fig. 6a illustrates, in a top view, the wall-forming part 2.

Each of the sheet sections 2' is bound to form a wall section 1' of the main part 1a.

Most of the sheet sections 2' are bound to form a wall section 1' of a circumferential side wall of main part 1a, actually all of them, except for the central one. The central sheet section is bound to form a wall section 1' of an end wall of main part 1b.

Fig. 6b illustrates, in a perspective view, the wall-forming part 2 of Fig. 6a in a folded state. Pairs of adjoining edges are formed, but not specifically emphasized in Fig. 6b. In the working state (not illustrated here), wall-forming part 2 and the respective sheet sections 2', respectively, would be shaped and arranged approximately this way, but in an injection molding tool.

Fig. 6c illustrates, in a perspective view, the main part 1a of the corresponding portion packaging comprising the wall-forming part 2 of Fig. 6a and an injection molding material 7 as obtained in an injection molding step, e.g., the injection molding material 7 filling the gaps, as illustrated in Fig. 6c.

Of course, also in case of Figs. 6a to 6c, an interior coating could be produced, using injection molding, similarly as discussed for Figs. 5a to 5e, and the same applies to Figs. 3a to 3c. And it is also possible to use one and the same injection molding material for filling the gaps and for creating the interior coating.

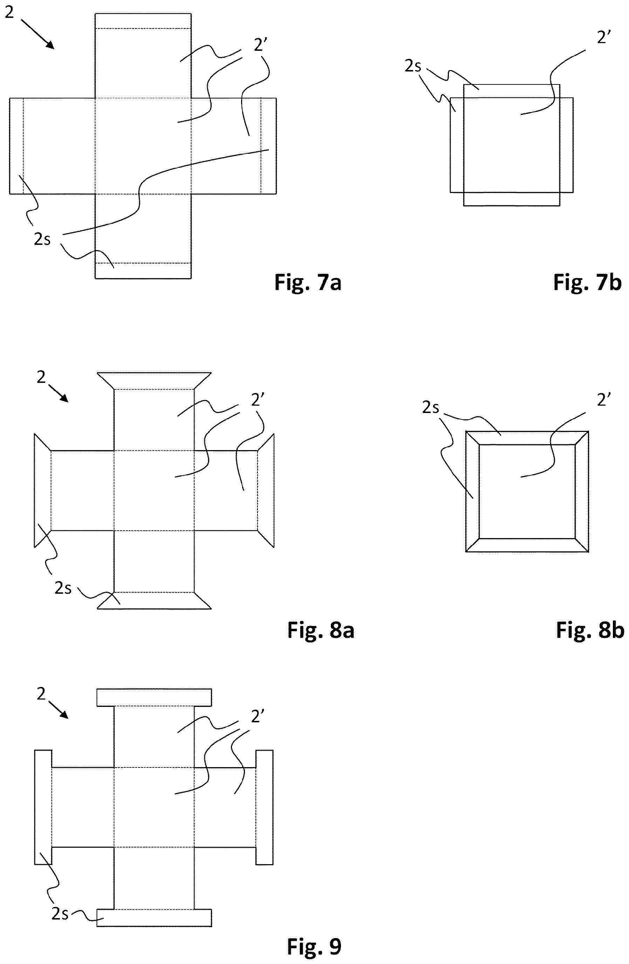

Fig. 7a illustrates, in a top view, a wall-forming part 2 usable for producing a main part of a portion packaging, comprising sealing sections 2s. The wall-forming part 2 can be identical to the one of Fig. 3a, except for being differently shaped (e.g., pre-cut) and scored or pre-folded or the like, so as to form sealing sections 2s for sealing a corresponding main part 1a, so as to completely close, in an airtight manner, the corresponding portion package.

Fig. 7b illustrates, also in a top view, the wall-forming part 2 of Fig. 7a in a folded state. The sealing sections 2s form a collar or fringe. This can facilitate the sealing process.

Analogously to Figs. 7a, 7b, Figs. 8a, 8b illustrate, in a top view, another wall-forming part 2 usable for producing a main part of a portion packaging, comprising sealing sections 2s. While the collar or fringe formed by the sealing sections 2s in Figs. 7a, 7b is interrupted at four corners, the collar or fringe in Figs. 8a, 8b is practically continuous, due to the shape of the wall-forming part 2.

Fig. 9 illustrates, in a top view, yet another wall-forming part 2 usable for producing a main part of a portion packaging, comprising sealing sections 2s. In this case, in a folded state (not illustrated), the collar or fringe in Fig. 9 would be continuous, due to the shape of the wall-forming part 2, and the sealing sections 2s would even be overlapping at the four corners.

Of course, also the wall-forming parts 2 of Figs. 7 to 9 can be essentially comprised of the fiber-reinforced composite material, such as herein described before.

Furthermore, in the injection molding process, the coating material can as well be applied to the sealing sections 2s.

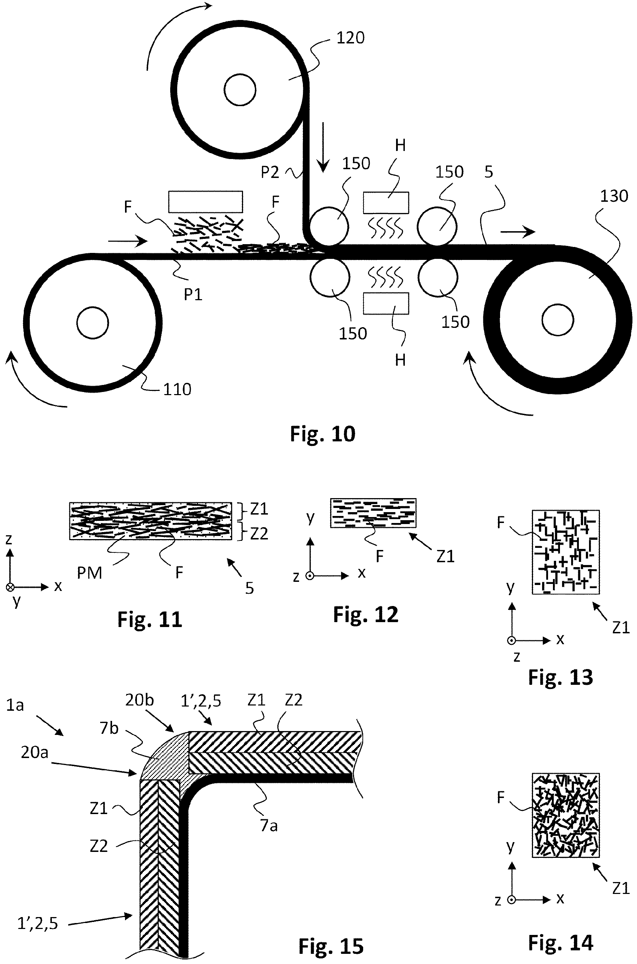

Fig. 10 shows, in a side-view, a strongly schematized illustration of a method for manufacturing a sheet-shaped fiber-reinforced composite material 5.

A roll 110 of a sheet-shaped first polymer material P1 is unwound, and a roll 120 of a sheet-shaped second polymer material P2 is unwound, the sheets of polymer materials P1 and P2 are brought to face one another with fibers F between them. The fibers F are trickled onto the sheet of polymer material P1 for that purpose. And rollers 150 are used for guiding the polymer sheets and/or for applying pressure to them.

The polymer sheets are furthermore heated, e.g., using heaters H, so as to facilitate embedding the fibers F in one or both of the polymer materials P1 and P2, in particular if one or both are thermoplasts.

As a result, a fiber-reinforced composite material 5 is obtained which comprises the two polymer materials P1, P2 as a polymer matrix and the fibers F as a filler.

The resulting sheet of the fiber-reinforced composite material 5 is wound to a roll 130.

The polymer materials P1, P2 can be biodegradable thermoplasts, in particular, at least one of them comprises or even is a water-soluble polymer material (as herein described before).

Further details and configurations regarding the choice and properties of the materials (including the injection molding materials) are described herein above and below.

Fig. 11 shows, in a strongly schematized fashion, a cross-section perpendicular to the sheet plane through the fiber-reinforced composite material 5, e.g., manufactured according to the method sketched in Fig. 10.

In Figs. 11 to 14, coordinate systems are sketched to clarify what is shown. The plane defined by the sheet of fiber-reinforced composite material 5 is aligned parallel to the x-y-plane; in other words, the z-axis is aligned perpendicular to the sheet.

The fiber-reinforced composite material 5 in Fig. 11 comprises a first zone Z1 and a second zone Z2. The zones Z1, Z2 are essentially parallel to the plane defined by the sheet. Zones Z1 and Z2 both contain the fibers F and material of the polymer matrix PM. E.g., zone Z1 could be comprised of the first polymer material P1 plus a portion of the fibers F, and zone Z2 could be comprised of the second polymer material P2 plus the remaining portion of the fibers F; cf. Fig. 10.

The fibers F are randomly oriented. In strongly shematized Fig. 11, the fibers Fare symbolized by straight lines, but usually, the fiber are arbitrarily shaped, e.g., curled, wound, bent - and entangled.

Fig. 12 shows, in a strongly schematized fashion, a top-view onto a cross-section through a zone Z1 of a fiber-reinforced composite material 5. In this case, the fibers F have a pronounced preferred orientation along one direction, namely along the x-axis.

Similarly, Fig. 13 shows, in a strongly schematized fashion, a top-view onto a cross-section through a zone Z1 of a fiber-reinforced composite material 5. But in this case, the fibers F have pronounced preferred orientations along two directions, namely along the x-axis and along the y-axis. A portion, e.g., about 50%, of the fibers F are essentially oriented along the x-axis, and essentially the remaing portion of the fibers F are essentially oriented along the y-axis.

Such fiber orientations may be unsuitable for the purpose. The inventors discovered that a random fiber orientation (at least within the plane) can result in a sufficient stability of portion packagings manufactured from corresponding fiber-reinforced composite material while showing a good manufacturability of the portion packagings. And furthermore, such a corresponding fiber-reinforced composite material also makes possible to have a rather high volume percentage of fibers in the fiber-reinforced composite material, e.g., between 10% and 40%. This way, the fiber-reinforced composite material 5 can comprise relatively much recycled fibers F, such as wastepaper fibers, and/or relatively much renewable fibers, such as plant fibers.

Fig. 14 shows, in a strongly schematized fashion, a top-view onto a cross-section through a zone Z1 of a fiber-reinforced composite material. Here, within the plane (x-y-plane), the fibers F (drawn as straight lines) are aligned essentially randomly, in other words, the fibers are arranged without a pronounced preferred direction of orientation within the plane (x-y-plane) defined by the sheet of the fiber-reinforced composite material. As mentioned before, the fibers F can actually be shaped in many ways.

Fig. 15 shows a cross-section through a detail of a portion packaging, more particularly through a detail of a main part 1a, illustrating a pair of adjoining edges 20a, 20b and filling material 7b (hatched) and coating material 7a (illustrated as a thick line). The plane of the cross-section is aligned perpendicular to the planes defined by the sheets of the fiber-reinforced composite material 5.

The injection molding materials 7a and 7b can be different from one another as implied by the figure, but they could alternatively also be of identical composition and applied in one and the same single-component injection molding step.

As will have become clear from the above, the described proposed manufacturing methods are suitable for producing new kinds of portion packagings and portion packages, respectively, in a very environmentally friendly way.

## Claims

1. A **fiber-reinforced composite material,** comprising a **polymer matrix** and **fibers** embedded in the polymer matrix, wherein, to at least 80% by weight, in particular to at least 90% by weight, the polymer matrix is **biodegradable,** and wherein at least 80% by weight, in particular at least 90% by weight, of the fibers are **biodegradable.**

2. The fiber-reinforced composite material according to claim 1, wherein the polymer matrix comprises a **water-soluble polymer material,** in particular to at least 35% by weight, more particularly to at least 45% by weight, even more particularly to at least 70% by weight.

3. The fiber-reinforced composite material according to claim 2, wherein the water-soluble polymer material is a **vinyl-alcohol copolymer,** in particular wherein the water-soluble polymer material is one of
- a poly(vinyl alcohol) copolymer;
- a butenediol-vinylalcohol copolymer;
- an ethylene-vinylalcohol copolymer;
or is a mixture of two or more of
- a poly(vinyl alcohol) copolymer;
- a butenediol-vinylalcohol copolymer;
- an ethylene-vinylalcohol copolymer.

4. The fiber-reinforced composite material according to one of claims 1 to 3, wherein the fibers are, to at least 80% by weight, **cellulose** fibers, in particular wherein the fibers are, to at least 60% by weight, in particular to at least 80% by weight, wastepaper fibers.

5. The fiber-reinforced composite material according to one of claims 1 to 4, wherein the fibers in the polymer matrix are essentially **randomly oriented;** in particular wherein the fiber-reinforced composite material has a **sheet shape,** the sheet defining an axis perpendicular to the sheet, mechanical properties of the fiber-reinforced composite material being essentially isotropic along all directions perpendicular to the axis.

6. The fiber-reinforced composite material according to one of claims 1 to 5, wherein at least 50% by volume, in particular at least 65% by volume, more particularly at least 70% by volume, of the fibers have a **length** of between 40 mm and 100 mm.

7. A **method** for **manufacturing a fiber-reinforced composite material,** in particular a fiber-reinforced composite material according to one of claims 1 to 6, the method comprising
- providing a **first sheet** of a **first polymer material**;
- providing a **second sheet** of a **second polymer material,**
- providing fibers;
- arranging the first sheet and the second sheet to face one another with the fibers between the first sheet and the second sheet;
- **bonding** the first sheet and the second sheet to one another with the fibers between the first sheet and the second sheet to **embed** the fibers in the first sheet and/or in the second sheet, in particular wherein the bonding comprises an application of **heat** to the first sheet and/or to the second sheet;
wherein, to at least 80% by weight, in particular to at least 90% by weight, the first polymer material is **biodegradable;** and/or to at least 80% by weight, in particular to at least 90% by weight, the second polymer material is **biodegradable;** and wherein at least 80% by weight, in particular at least 90% by weight, of the fibers are **biodegradable.**

8. The method according to claim 7, wherein the first sheet is provided in form of a **first stock,** in particular in form of a **first roll** to which at least a portion of the first sheet is wound, and wherein the second sheet is provided in form of a **second stock,** in particular in form of a **second roll** to which at least a portion of the second sheet is wound, the method in particular further comprising
- retrieving the first sheet from the first stock;
- retrieving the second sheet from the second stock;
- adding a **third sheet** resulting from the bonding to a third stock;
in particular comprising
- winding off the first sheet from the first roll;
- winding off the second sheet from the second roll;
- winding a **third sheet** resulting from the bonding to a third roll.

9. A **use** of a fiber-reinforced composite material as claimed in one of claims 1 to 6 or of a fiber-reinforced composite material manufactured as claimed in one of claims 7 to 8 as a material forming at least a portion of a **wall** of at least a **part** of a **portion packaging** for packaging an extraction material for preparation of a beverage from the extraction material and an extraction liquid.

10. A **portion packaging** for packaging an **extraction material** for preparation of a beverage from the extraction material and an extraction liquid, the portion packaging comprising a **first part** comprising two or more **wall sections** of the portion packaging and comprising
- a **wall-forming part** comprising two or more **sheet sections,** each of the wall sections comprising a respective one of the sheet sections;
each of the sheet sections comprising, in particular being made of, a fiber-reinforced composite material as claimed in one of claims 1 to 6 or a fiber-reinforced composite material manufactured as claimed in one of claims 7 to 8;
the first part defining an **interior space,** the interior space being **open** at one side referred to as **open side** and being otherwise delimited, in an airtight manner, by **delimitations** formed by the first part, the delimitations comprising the sheet sections.

11. The portion packaging according to claim 10, the first part comprising an **interior coating** made of a **coating material,** the interior coating facing the interior space and comprising a coating on the wall-forming part, more particularly on the sheet sections, in particular wherein the coating material is biodegradable to at least 80% by weight, in particular to at least 90% by weight;
more particularly wherein the **coating material,** to at least 50% by weight, in particular to at least 80% by weight, is comprised of a **water-insoluble** polymer material, more specifically of one of
- a poly(lactic acid);
- a polyhydroxyalkanoate, in particular a hydroxyalkanoate copolymer, more particularly a hydroxybutyrate or a hydroxybutyrate copolymer;
- a polybutylene succinate;
or of a mixture of two or more of
- a poly(lactic acid);
- a polyhydroxyalkanoate, in particular a hydroxyalkanoate copolymer, more particularly a hydroxybutyrate or a hydroxybutyrate copolymer;
- a polybutylene succinate.

12. The portion packaging according to claim 10 or claim 11, the wall-forming part comprising one or more **pairs of adjoining edges,** each of the sheet sections having at least one **edge** forming, together with an **adjoining edge** of a neighboring one of the sheet sections, one of the pairs of adjoining edges, the portion packaging comprising a **filling material interconnecting** the adjoining edges of each of the pairs of adjoining edges and closing any **gap** between the adjoining edges of each of the pairs of adjoining edges, in particular in an airtight manner; in particular wherein the filling material is biodegradable to at least 80% by weight, in particular to at least 90% by weight.

13. A **method** for manufacturing a **portion packaging** for packaging an **extraction material** for preparation of a beverage from the extraction material and an extraction liquid, in particular for manufacturing a portion packaging according to one of claims 10 to 12, the portion packaging comprising a **first part** comprising two or more **wall sections** of the portion packaging, the first part defining an **interior space,** the interior space being **open** at one side referred to as **open side** and being otherwise delimited, in an airtight manner, by **delimitations** formed by the first part, the method comprising
- providing a **wall-forming part** comprising two or more **sheet sections,** the delimitations comprising the sheet sections;
- bringing the wall-forming part into a **working state** comprising introducing the wall-forming part into an **injection molding tool;**
- carrying out an **injection molding step** with one or more **injection molding materials** and by means of the injection molding tool with the wall-forming part in the working state;
each of the sheet sections comprising, in particular being made of, a fiber-reinforced composite material as claimed in one of claims 1 to 6 or a fiber-reinforced composite material manufactured as claimed in one of claims 7 to 8;
the wall-forming part in the working state comprising one or more **pairs of adjoining edges,** each of the sheet sections having at least one **edge** forming, together with an **adjoining edge** of a neighboring one of the sheet sections, one of the pairs of adjoining edges, and each of the wall sections comprising a respective one of the sheet sections;
the injection molding step comprising one or both of
- a **coating step;**
- an **interconnecting step;**
the coating step comprising producing an **interior coating** from a **first** one of the injection molding materials, the interior coating comprising a coating on the wall-forming part, more particularly on the sheet sections, the interior coating facing the interior space, in particular wherein the first injection molding material is biodegradable to at least 80% by weight, in particular to at least 90% by weight;
the interconnecting step comprising **interconnecting** the adjoining edges of each of the pairs of adjoining edges and closing any **gap** between the adjoining edges of each of the pairs of adjoining edges, in particular in an airtight manner, by means of a **second** one of the injection molding materials which can be identical to or different from the first one of the injection molding materials, in particular wherein the second injection molding material is biodegradable to at least 80% by weight, in particular to at least 90% by weight.

14. The method according to claim 13, the injection molding step comprising both, the coating step and the interconnecting step, and a composition of the first injection molding material being identical to a composition of the second injection molding material, the first injection molding material comprising to at least 20% by weight, more particularly to at least 80% by weight, a **water-insoluble** polymer material, more specifically wherein the water-insoluble polymer material is
- a poly(lactic acid);
- a polyhydroxyalkanoate, in particular a hydroxyalkanoate copolymer, more particularly a hydroxybutyrate or a hydroxybutyrate copolymer;
- a polybutylene succinate;
or is a mixture of two or more of
- a poly(lactic acid);
- a polyhydroxyalkanoate, in particular a hydroxyalkanoate copolymer, more particularly a hydroxybutyrate or a hydroxybutyrate copolymer;
- a polybutylene succinate;
wherein furthermore the first injection molding material **optionally** comprises to between 5% by weight and 50% by weight, more particularly to between 10% by weight and 40% by weight, a **water-soluble** polymer material, more specifically wherein the water-soluble polymer material is
- a poly(vinyl alcohol) copolymer;
- a butenediol-vinylalcohol copolymer;
- an ethylene-vinylalcohol copolymer;
or is a mixture of two or more of
- a poly(vinyl alcohol) copolymer;
- a butenediol-vinylalcohol copolymer;
- an ethylene-vinylalcohol copolymer.

15. A **method** for manufacturing a **portion package,** in particular a portion package comprising a portion packaging as claimed in one of claims 10 to 12 or comprising a portion packaging manufactured as claimed in claim 13 or claim 14, the method comprising
- providing a portion packaging as claimed in one of claims 10 to 12 or a portion packaging manufactured as claimed in claim 13 or claim 14, the portion packaging comprising, in addition to the first part, a **second part;**
- introducing an **extraction material** into the first part and/or into the second part;
- **sealing** the portion packaging, comprising bonding the first part and the second part to one another, in particular in an airtight manner.
